# EUROPÄISCHE PATENTANMELDUNG

(11) **EP 1 111 009 A2**
(43) Veröffentlichungstag der Anmeldung: **27.06.2001**
(21) Anmeldenummer: 00126138.7
(22) Anmeldetag: 30.11.2000
(51) Int. Cl.: C08L 95/00

(54) **Verwendung von Emulgatoren in Bitumenemulsionen**

(30) Priorität: 09.12.1999 DE 19959314
(71) Anmelder: Cognis Deutschland GmbH, 40589 Düsseldorf (DE)
(72) Erfinder: Bigorra Llosas, Joaquin, Dr., 08203 Sabadell (ES); Escoda, Maria, 08960-St. Just Desvern/Barcelo (ES); Pi Subirana, Rafael, Dr., 08400 Granollers (ES)

(57) **Zusammenfassung**

Vorgeschlagen wird die Verwendung von Emulgatoren, enthaltend
(a) Polyamine und
(b) Kationpolymere
zur Herstellung von wäßrigen Bitumenemulsionen.

## Beschreibung

### Gebiet der Erfindung

Die Erfindung befindet sich auf dem Gebiet der Bitumenemulsionen und betrifft neue Emulgatoren zur Herstellung von Bitumenemulsionen.

### Stand der Technik

Bitumen stellt ein bei der schonenden Aufarbeitung von Erdöl gewonnenes dunkelfarbiges, halbfestes bis springhartes, schmelzbares, hochmolekulares Kohlenwasserstoffgemisch dar. Üblicherweise handelt es sich um kolloide Systeme, speziell Sole, die in einer öligen Grundmasse (Maltene) dunkle, harz-oder kohlenartige Teilchen mit molaren Massen im Bereich etwa 300 bis 3000 enthalten, welche als Asphaltene bezeichnet werden. Wäßrige Bitumenemulsionen werden überwiegend im Straßenbau eingesetzt. Als Emulgatoren haben sich für diesen Zweck Diamine, beispielsweise N-Stearylpropylendiamin, oder Fettsäureamidoamine, wie z.B. Talgfettsäureamidopropylamin als geeignet erwiesen. Bei der Herstellung von Bitumenemulsionen lassen sich grundsätzlich zwei unterschiedliche Verfahrensformen unterscheiden: Soll der Bitumen vor Ort direkt verarbeitet werden, ist man daran interessiert, daß die offene Zeit, d.h. die Zeit bis zum Abbinden möglichst kurz ist. In der Praxis bedeutet dies, daß die Bitumenemulsion beim Kontakt mit den Füllstoffen möglichst rasch brechen soll; man spricht in diesem Zusammenhang auch von einer hohen Bruchgeschwindigkeit.

Im zweiten Fall erfolgt die Herstellung der Bitumenemulsion im Werk, so daß man umgekehrt gerade an einer großen offenen Zeit interessiert ist, damit der Bitumen nicht während des Transportes abbindet. Hier wird also eine möglichst niedrige Bruchgeschwindigkeit gewünscht. Zur Charakterisierung der Bruchgeschwindigkeit einer Bitumenemulsion hat sich ein einfaches Testverfahren etabliert: Hierzu werden 100 g einer Bitumenemulsion unter starker Scherung solange Füllstoffe zugesetzt, bis es zum Bruch der Emulsion, d.h. zur Abscheidung des Wassers kommt. Der Bruchindex berechnet sich dann aus dem Gewichtsverhältnis von zugesetztem Füllstoff zu Emulsion multipliziert mit dem Faktor 100. Je höher der Füllstoffanteil ist, um so "langsamer" ist die Emulsion, d.h. um so niedriger ist die Bruchgeschwindigkeit.

In der Praxis gestaltet sich insbesondere die Herstellung von Bitumenemulsionen mit niedriger Bruchgeschwindigkeit ausgesprochen schwierig. Die Aufgabe der vorliegenden Erfindung hat folglich darin bestanden, neue Emulgatoren für die Herstellung derartiger Bitumenemulsionen zur Verfügung zu stellen.

### Beschreibung der Erfindung

Gegenstand der Erfindung ist die Verwendung von Emulgatoren, enthaltend
(a) Polyamine und
(b) Kationpolymere
zur Herstellung von wäßrigen Bitumenemulsionen.

Überraschenderweise wurde gefunden, daß der Zusatz von Kationpolymeren zu bekannten Emulgatoren vom Typ der Polyamine die Herstellung von Bitumenemulsionen ermöglicht, die eine sehr niedrige Bruchgeschwindigkeit zeigen. Die Erfindung schließt dabei die Erkenntnis ein, daß die resultierenden Bitumenemulsionen bei gleichem Feststoffgehalt eine höhere Stabilität aufweisen, d.h. eine geringe Tendenz zur Sedimentation zeigen.

### Polyamine

Bei den Polyaminen, die im Sinne der vorliegenden Erfindung die Komponente (a) bilden, handelt es sich vorzugsweise um Stoffe, die der Formel **(I)** folgen,

**R**^{**1**}**-NH-(CH**_{**2**}**)**_{**n**}**-NH**_{**2**} (I)

in der R¹ für einen Alkyl- und/oder Alkenylrest mit 6 bis 22, vorzugsweise 12 bis 18 Kohlenstoffatomen und n für Zahlen von 1 bis 5, vorzugsweise 3 steht. Die Herstellung dieser Stoffe erfolgt beispielsweise durch Anlagerung von Fettaminen an Acrylnitril und nachfolgende Hydrierung. Besonders bevorzugt ist der Einsatz von Talgalkylpropylendiaminen.

### Kationpolymere

Geeignete Kationpolymere sind beispielsweise kationische Cellulosederivate, wie z.B. eine quaternierte Hydroxyethylcellulose, die unter der Bezeichnung Polymer JR 400® von Amerchol erhältlich ist, kationische Stärke, Copolymere von Diallylammoniumsalzen und Acrylamiden, quaternierte Vinylpyrrolidon/Vinylimidazol-Polymere, wie z.B. Luviquat® (BASF), Kondensationsprodukte von Polyglycolen und Aminen, quaternierte Kollagenpolypeptide, wie beispielsweise Lauryldimonium hydroxy propyl hydrolyzed collagen (Lamequat®L/Grünau), quaternierte Weizenpolypeptide, Polyethylenimin, kationische Siliconpolymere, wie z.B. Amidomethicone, Copolymere der Adipinsäure und Dimethylaminohydroxypropyldiethylentriamin (Cartaretine®/Sandoz), Copolymere der Acrylsäure mit Dimethyldiallylammoniumchlorid (Merquat® 550/Chemviron), Cholinaten, Polyaminopolyamide, wie z.B. beschrieben in der **FR 2252840 A** sowie deren vernetzte wasserlöslichen Polymere, kationische Chitinderivate wie beispielsweise quaterniertes Chitosan, gegebenenfalls mikrokristallin verteilt, Kondensationsprodukte aus Dihalogenalkylen, wie z.B. Dibrombutan mit Bisdialkylaminen, wie z.B. Bis-Dimethylamino-1,3-propan, kationischer Guar-Gum, wie z.B. Jaguar® CBS, Jaguar® C-17, Jaguar® C-16 der Firma Celanese, quaternierte Ammoniumsalz-Polymere, wie z.B. Mirapol® A-15, Mirapol® AD-1, Mirapol® AZ-1 der Firma Miranol. Ferner können auch Polymere auf Basis von Adipinsäure und Diethylentriamin eingesetzt werden, welche mit Dimethylsulfat, Methylchlorid oder Benzylchlorid quaterniert und unter der Bezeichnung Fibrabon® im Handel erhältlich sind. Vorzugsweise setzt man Kationpolymere ein, die als Monomer oder Co-Monomer Acrylsäure und/oder Methacrylsäure oder deren Amide enthalten. Im Sinne der Erfindung ist es möglich, die Polyamine und die Kationpolymere - jeweils bezogen auf den Feststoffgehalt - im Gewichtsverhältnis 99,9 : 0,1 bis 50 : 50, vorzugsweise 95 : 5 bis 65 : 35 und insbesondere 90 : 10 bis 75 : 25 einzusetzen.

### Gewerbliche Anwendbarkeit

In der Regel werden die Emulgatoren in Mengen von 0,15 bis 1 Gew.-% - bezogen auf die Bitumenemulsionen - eingesetzt. Zur Herstellung der Emulsionen legt man vorzugsweise die wäßrige Emulgatorlösung und den Bitumen aus separaten Tanks in eine Mischapparatur vor, in der die Homogenisierung unter starker Scherung erfolgt. Für diesen Zweck eignen sich beispielsweise ein Ultra-Turrax oder eine Kolloidmühle. Die Emulgatoren werden üblicherweise auf 50 bis 70 °C temperiert, während der Bitumen aus Gründen der Verarbeitbar- und Pumpbarkeit Temperaturen oberhalb von 120 und vorzugsweise von 140 bis 150 °C aufweist. Die resultierende Emulsion weist in der Regel eine Mischtemperatur im Bereich von 60 bis 90 °C auf.

### Beispiele

Zur Herstellung der wäßrigen Emulgatorphase wurden die gewünschten Mengen des Polyamins und gegebenenfalls des Kationpolymers (A = Acrylamid-Diallylammoniumchlorid-Copolymer; B = Acrylamid-Acrylcholinat-Copolymer) bei etwa 45 °C in einer Wasserphase dispergiert, die durch Zugabe von Salzsäure auf einen pH-Wert von 2,5 bis 3 eingestellt wurde. Die Herstellung der Bitumenemulsionen erfolgte dann in einer Pilotanlage der Firma Atomix. Hierzu wurden die wäßrigen Emulgatoren (56 °C) und der Bitumen (140 °C) in zwei verschiedenen Tanken vorgelegt und unter starker Scherung (9.000 Upm) mit Hilfe einer Kolloidmühle kontinuierlich vermischt (Temperatur der Mischung : 75 °C). Die Ergebnisse sind in Tabelle 1 zusammengefaßt. Bei der Bruchgeschwindigkeit wurde zwischen "s" (= schnell) und "l" (= langsam) unterschieden. In der Zeile "Füllstoffmenge" ist die Menge Füllstoff angegeben, die der Emulsion bis zum Bruch zugesetzt werden konnte. Der Trockenrückstand der Emulsionen wurde nach einer Behandlung von 2 h bei 105 °C und 1 h bei 163 °C bestimmt. Die Beispiele 1 bis 5 sind erfindungsgemäß, die Beispiele V1 und V2 dienen zum Vergleich.

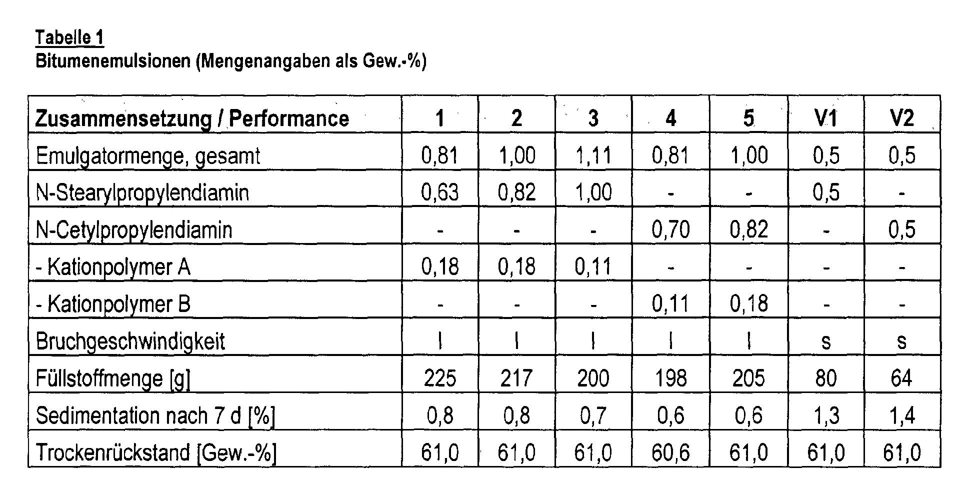

## Patentansprüche

1. Verwendung von Emulgatoren, enthaltend
(a) Polyamine und
(b) Kationpolymere
zur Herstellung von wäßrigen Bitumenemulsionen.

2. Verwendung nach Anspruch 1, **dadurch gekennzeichnet,** daß man Polyamine der Formel (I) einsetzt,
**R**^{**1**}**-NH-(CH**_{**2**}**)**_{**n**}**-NH**_{**2**} (I)
in der R¹ für einen Alkyl- und/oder Alkenylrest mit 6 bis 22 Kohlenstoffatomen und n für Zahlen von 1 bis 5 steht.

3. Verwendung nach den Ansprüchen 1 und/oder 2, **dadurch gekennzeichnet,** daß man Polyamine der Formel (I) einsetzt, in der R¹ für einen Alkylrest mit 12 bis 18 Kohlenstoffatomen steht.

4. Verwendung nach mindestens einem der Ansprüche 1 bis 3, **dadurch gekennzeichnet,** daß man Polyamine der Formel (I) einsetzt, in der n für 3 steht.

5. Verwendung nach mindestens einem der Ansprüche 1 bis 4, **dadurch gekennzeichnet,** daß man Kationpolymere einsetzt, die ausgewählt sind aus der Gruppe, die gebildet wird von quaternierten Hydroxyethylcellulosen, kationischen Stärken, Copolymeren von Diallylammoniumsalzen und Acrylamiden, quaternierten Vinylpyrrolidon/Vinylimidazol-Polymeren, Kondensationsprodukten von Polyglycolen und Aminen, quaternierten Kollagenpolypeptiden, quaternierten Weizenpolypeptiden, Polyethyleniminen, kationischen Siliconpolymeren, Copolymeren der Adipinsäure und Dimethylaminohydroxypropyldiethylentriamin, Copolymeren der Acrylsäure mit Dimethyldiallylammoniumchlorid, Cholinaten, Polyaminopolyamiden sowie deren vemetzten wasserlöslichen Polymeren, kationischen Chitinderivaten, Kondensationsprodukten aus Dihalogenalkylen mit Bisdialkylaminen, kationischem Guar-Gum, quaternierten Ammoniumsalz-Polymeren, quaternierte Polyamide auf Basis von Adipinsäure und Diethylentriamin sowie deren Gemischen.

6. Verwendung nach mindestens einem der Ansprüche 1 bis 5, **dadurch gekennzeichnet,** daß man Kationpolymere einsetzt, die als Monomer oder Co-Monomer (Meth-)Acrylsäure oder deren Amide enthalten.

7. Verwendung nach mindestens einem der Ansprüche 1 bis 6, **dadurch gekennzeichnet**, daß man die Polyamine und die Kationpolymere - jeweils bezogen auf den Feststoffgehalt - im Gewichtsverhältnis 99,9 : 0,1 bis 50 : 50 einsetzt.

8. Verwendung nach mindestens einem der Ansprüche 1 bis 7, **dadurch gekennzeichnet,** daß man die Polyamine und die Kationpolymere - jeweils bezogen auf den Feststoffgehalt - im Gewichtsverhältnis 95 : 5 bis 65 : 35 einsetzt.

9. Verwendung nach mindestens einem der Ansprüche 1 bis 8, **dadurch gekennzeichnet,** daß man die Emulgatoren in Mengen von 0,15 bis 1 Gew.-% - bezogen auf die Bitumenemulsionen - einsetzt.
